## Europäisches Patentamt

## European Patent Office

## Office européen des brevets

(11) Veröffentlichungsnummer : **0 013 284**
**B1**.

(12) # EUROPÄISCHE PATENTSCHRIFT

(45) Veröffentlichungstag der Patentschrift :
21.10.81

(21) Anmeldenummer : 79101485.5

(22) Anmeldetag : 15.05.79

(51) Int. Cl.³ : **B 01 D   3/16, F 28 F 25/04**

(54) Vorrichtung für die Flüssigkeitsverteilung in Stoff- und Wärmeaustauschkolonnen.

(30) Priorität : 09.01.79 BE 873352

(43) Veröffentlichungstag der Anmeldung :
23.07.80 (Patentblatt 80/15)

(45) Bekanntmachung des Hinweises auf die Patenterteilung : 21.10.81 Patentblatt 81/42

(84) Benannte Vertragsstaaten :
AT CH FR GB IT NL

(56) Entgegenhaltungen :
DE - A - 2 206 230
DE - C - 492 071
FR - A - 2 354 128
US - A - 2 319 814
US - A - 3 491 792
US - A - 3 795 388

(73) Patentinhaber : **Manteufel, Rolf Paul Christian**
**Epiceadreef 11**
**B-2180 Kalmthout-Heide (BE)**

(72) Erfinder : **Manteufel, Rolf Paul Christian**
**Epiceadreef 11**
**B-2180 Kalmthout-Heide (BE)**

(74) Vertreter : **Görtz, Helmut, Dipl.-Ing.**
**Schneckenhofstrasse 27**
**D-6000 Frankfurt am Main (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

## Vorrichtung für die Flüssigkeitsverteilung in Stoff- und Wärmeaustauschkolonnen

Die Erfindung betrifft eine Vorrichtung zum gleichmäßigen Verteilen von Flüssigkeiten auf Kolonnenflächen durch Rinnenverteiler mit Überlaufschlitzen und Flüssigkeitsleitelementen.

Rinnenverteiler mit Überlaufschlitzen sind wegen der maximal zur Verfügung stehenden Dampfdurchtrittsfläche und der trotzdem im gleichmäßigen Abstand angeordneten Flüssigkeitsablaufstellen die am besten geeigneten Flüssigkeitsverteiler in der industriellen Anwendung. Sie weisen jedoch, insbesondere bei kleinen Flüssigkeitsablaufmengen, gewisse Nachteile auf, die bei kleinen Überlaufhöhen, großem Flüssigkeitsgefälle und bedingt durch die Abhängigkeit von den Herstellungstoleranzen der Schlitze, zu unterschiedlichen Ablaufmengen oder sogar zeitweise zum Versiegen von Teilströmen führen können.

In der DE-C 1 084 699 ist dagegen eine Vorrichtung zum gleichmäßigen Abführen der Flüssigkeit von Kolonnenböden über ein Wehr beschrieben, bei der als Leitelemente Kapillaren von der einen Seite des Wehres über seine Oberkante auf die andere Seite des Wehres führen.

Solche Kapillarverteiler sind jedoch aufgrund der sehr kleinen Kapillarabmessungen nur zur Verteilung sehr geringer Flüssigkeitsmengen, z.B. im Hochvakuumgebiet, geeignet und in der Menge der Flüssigkeitsaufgabe nach oben begrenzt. Dicht aneinander angeordnete Kapilarelemente arbeiten bei ansteigenden Flüssigkeitsmengen und damit kleiner werdenden Saughöhen indifferent und sind schmutzempfindlich. Bei diesen Flüssigkeitsverteilern, die aufgrund von Kapillarkräften arbeiten, können sich auch starke Schwankungen der Teilstrommengen durch sich verändernde Stoffwerte der Flüssigkeit, wie z.B. der Zähigkeit und Oberflächenspannung bemerkbar machen. Wegen der starken Schwankungen der Teilströme können deshalb Verteilerböden mit kapillarer Flüssigkeitsförderung in der industriellen Praxis nur in Verbindung mit nachgeschalteten Verteilerblechen mit Ablaufnasen eingesetzt werden.

Der Erfindung liegt die Aufgabe zugrunde, eine Vorrichtung zu konstruieren, bei der die vorgenannten Nachteile der bekannten Verteiler mit Überlauf-Leitelementen, die aufgrund von Kapillarkräften fördern, vermieden sind und die sich durch einen einfachen und gegen Betriebsstörungen wenig anfälligen Aufbau auszeichnet.

Diese Aufgabe wird erfindungsgemäß durch eine Vorrichtung gelöst, die dadurch gekennzeichnet ist, daß bei einem Rinnenverteiler mit Überlaufschlitzen und Flüssigkeitsleitelementen die Leitelemente aus zwei im Abstand zueinander in einem unten erweiterten Bereich des Überlaufschlitzes angeordneten und haarnadelartig verbundenen Schenkeln bestehen, an der Außenseite der Überlaufrinne anliegen und mit ihren verbundenen Enden bis unter den Rinnenboden geführt sind, wobei der Abstand zwischen den Schenkeln so groß ist, daß keine Kapillarwirkung auftritt.

Ein Ausführungsbeispiel der Erfindung ist in der Zeichnung dargestellt und wird im folgenden näher beschrieben.

Figur 1 ist eine perspektivische Ansicht der erfindungsgemäßen Vorrichtung einer Überlaufrinne,

Figur 1A ist eine Seitenansicht der Fig. 1, in der die beiden Schenkel der Leitelemente im unten erweiterten Schlitz angeordnet sind,

Figur 2 ist eine Draufsicht auf eine Ausführungsform der erfindungsgemäßen Vorrichtung einer Überlaufrinne mit einem gemeinsamen Vorverteilersystem,

Figur 2A ist ein Vertikalschnitt längs der Linie A-A der Fig. 2,

Figur 2B ist ein weiterer Vertikalschnitt längs der Linie B-B der Fig. 2.

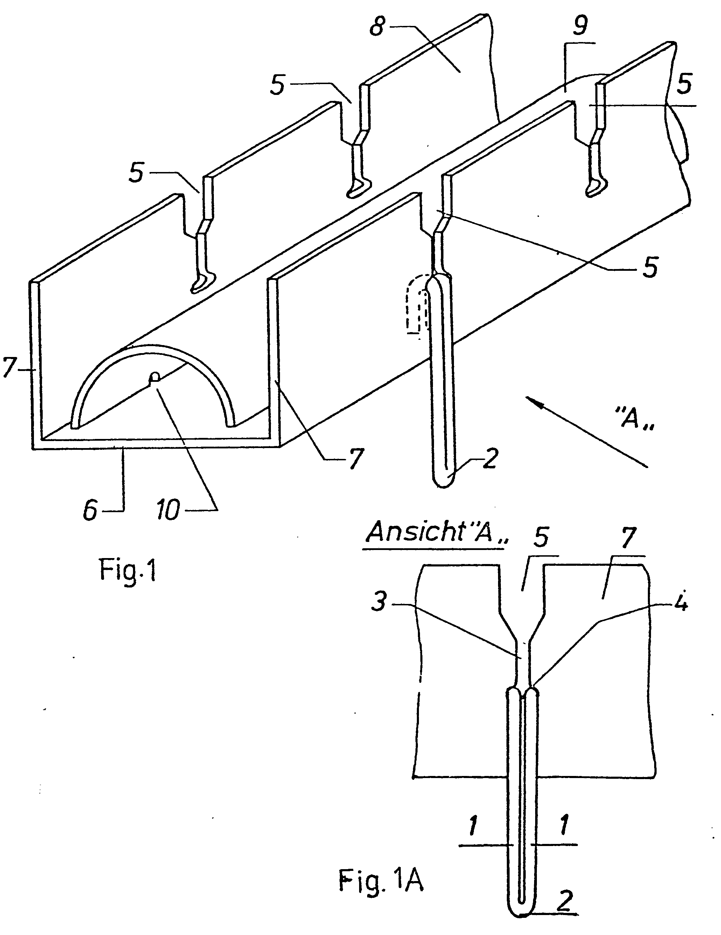

Die Vorrichtung wird direkt über dem zu berieselnden Kolonneneinbau angeordnet. Wie aus der Ansicht A der Figur 1 ersichtlich, sind die beiden Schenkel 1 der Leitelemente 2 im unten erweiterten Schlitz 3 so angeordnet, daß zwischen ihnen ein schmaler Spalt 4 gebildet wird. Der Schlitz 3 selbst hat vorzugsweise eine größere Breite als der Spalt 4 und erweitert sich nach oben zusätzlich. Hierdurch ist gewährleistet, daß der Flüssigkeitsverteiler einen großen Arbeitsbereich hat. Zur Vermeidung eines Flüssigkeitsgefälles beim Zulauf der Flüssigkeit zu den einzelnen Ablaufstellen 5 sind die Spalten 4 der Leitelemente 2 in einer ausreichenden Höhe über dem Rinnenboden 6 angeordnet. Die Leitelemente 2 selbst liegen mit ihren beiden Schenkeln 1 beidseitig an den Wehrwänden 7 der Überlaufrinnen 8 oder an den daran angebrachten Nasen an und sind außenseitig bis unter den Rinnenboden 6 geführt. Die ablaufende Flüssigkeit wird durch die beiden parallelen Schenkel 1 nach unten geführt und läuft unterhalb der Überlaufrinnen 8 von den Leitelementen 2 ab.

Abgesehen von einer einwandfreien waagerechten Ausrichtung der Überlaufrinnen 8 müssen die Ablaufstellen 5 so angeordnet sein, daß die Flüssigkeitsstauhöhen an den einzelnen Ablaufstellen 5 gleich sind. Dies setzt voraus, daß der Flüssigkeitsspiegel durch die den Überlaufrinnen 8 zulaufende Flüssigkeit nicht gestört wird. Auch darf keine große Querströmung zwischen den einzelnen Ablaufstellen 5 auftreten, um ein Flüssigkeitsgefälle (Flüssigkeitsgradienten) zwischen den Ablaufstellen 5 zu vermeiden.

Nach einer besonders zweckmäßigen Ausführungsform der Erfindung wird die zulaufende Flüssigkeit in auf den Überlaufrinnen befindliche Zuführungskanäle 9 gegeben und von hier den einzelnen Ablaufstellen 5 unterhalb des Flüssigkeitsspiegels zugeführt. Hierdurch wird erreicht, daß die Zulaufwege zwischen dem Zuführungskanal 9 und jeder einzelnen Ablaufstelle 5 etwa gleich lang sind. Auch können die durch die Strömung in den Zuführungskanälen 9 sich einstellenden Flüssigkeitsgradienten durch unterschiedliche Größen der Durchlauföffnungen 10 in den Zuführungskanälen 9 ausgeglichen werden. Die Zuführungskanäle 9 können sowohl rund als auch eckig oder als Rohr ausgeführt sein, wobei dann die Durchlauföffnungen 10 in der unteren Rohrhälfte liegen.

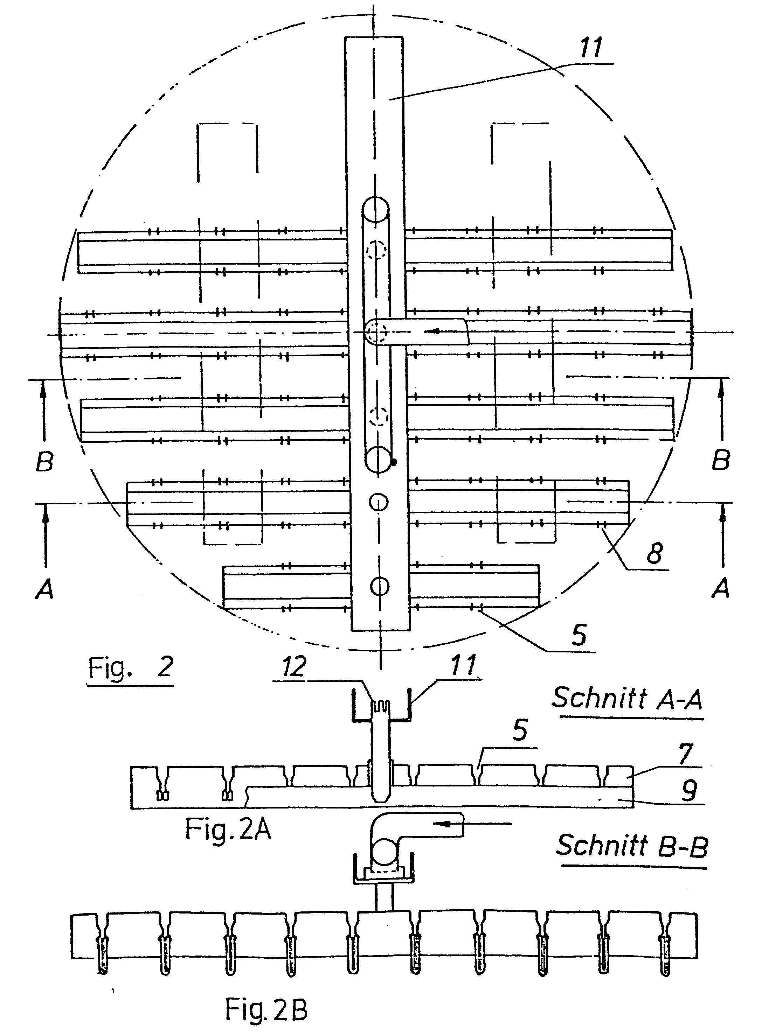

Nach einer weiteren vorteilhaften Ausführungsform wird die erfindungsgemäße Überlaufrinne mit einem gemeinsamen Vorverteilersystem kombiniert. Dabei werden alle Überlaufrinnen 8 über ihre Zuführungskanäle 9 von dem gemeinsamen Vorverteilersystem 11 (Figur 2) gespeist, wobei deren in gleicher Höhe angeordnete Überlaufschlitze 12 in ihrer Schlitzbreite der Anzahl der einzelnen Ablaufstellen 5 einer Überlaufrinne 8 angepaßt sind. Das Vorverteilersystem 11 kann auch geschlossen ausgeführt sein und unter Druck stehen.

Durch die im Unterschied zu scharfkantigen Löchern oder Schlitzen erfindungsgemäß düsenformgerechte Gestaltung der Durchlauföffnungen erfolgt eine Umlenkung der ablaufenden Flüssigkeit über die Wehrkante, wodurch die bekannte, mehr oder weniger große Kontraktion der ablaufenden Flüssigkeitsstrahlen an den scharfen Kanten weitgehend vermieden wird. Dies wird durch die an den Schenkeln der Flüssigkeitsleitelemente wirkenden Adhäsionskräfte erreicht, d.h. durch die Haftung der Berührungsteilchen der Flüssigkeit an der festen Körperoberfläche. Die Adhäsionskräfte an der durch die Schenkel des Flüssigkeitsleitelementes vergrößerten Durchlaufoberfläche wirken der Oberflächenspannung der Flüssigkeit entgegen, wodurch selbst bei kleinsten Ablaufmengen und unterschiedlichen Flüssigkeitsstauhöhen ein gleichmäßiges Ansprechen aller Ablaufstellen durch bessere Benetzung gewährleistet ist.

Dabei können die zwei in Abstand zueinander angeordneten Schenkel sowohl rund als auch viereckig ausgeführt sein. Jedoch ist die runde Ausführung aufgrund der sich dabei ergebenden konkaven Seitenkanten der Durchlauföffnung bei schlecht benetzenden Flüssigkeiten vorteilhafter. Auch ist die Verschmutzungsgefahr bei den glatten Schenkeloberflächen der Leitelemente geringer als bei kleinen scharfkantigen Löchern, Schlitzen oder Rohrstücken, bei denen durch die Kontraktion des Flüssigkeitsstrahles das bekannte Zuwachsen durchströmter Löcher auftritt.

**Ansprüche**

1. Vorrichtung zum gleichmäßigen Verteilen von Flüssigkeiten auf Kolonnenflächen durch Rinnenverteiler mit Überlaufschlitzen (3) und Flüssigkeitsleitelementen (2), dadurch gekennzeichnet, daß die Leitelemente (2) aus zwei im Abstand zueinander in einen unten erweiterten Bereich des Überlaufschlitzes (3) angeordneten und haarnadelartig verbundenen Schenkeln (1) bestehen, an der Außenseite der Überlaufrinne (8) anliegen und mit ihren verbundenen Enden bis unter den Rinnenboden (6) geführt sind, wobei der Abstand (4) zwischen den Schenkeln (1) so groß ist, daß keine Kapillarwirkung auftritt.

2. Vorrichtung nach Anspruch 1, dadurch gekennzeichnet, daß der Abstand (4) zwischen den beiden Schenkeln (1) des Flüssigkeitsleitelementes kleiner ist als die Breite des Überlaufschlitzes (3).

3. Vorrichtung nach Ansprüchen 1 und 2, dadurch gekennzeichnet, daß in den Überlaufrinnen Zuführungskanäle (9) mit Öffnungen (10) angeordnet sind, durch die die Flüssigkeitszufuhr unterhalb der Ablaufstellen (5) erfolgt.

4. Vorrichtung nach Ansprüchen 1 bis 3, dadurch gekennzeichnet, daß zur Speisung der einzelnen Überlaufrinnen (8) ein gemeinsamer Vorverteiler (11) vorgesehen ist, dessen in gleicher Höhe angeordnete Überlaufschlitze (12) in ihrer Breite der Anzahl der Ablaufstellen (5) einer Überlaufrinne (8) angepaßt sind.

**Claims**

1. Device for uniformly distributing liquids over column areas by means of trough distributors with overflow slots (3) and liquid-guiding elements (2), characterised in that the guiding elements (2) consist of two arms (1) which are arranged at a mutual distance in a region, widened at the bottom, of the overflow slot (3) and are joined in the manner of hairpins and which are in contact with the outside of the overflow trough (8) and the joined ends of which are taken down to a level below the bottom (6) of the trough, the distance (4) between the arms (1) being such that no capilliary action arises.

2. Device according to Claim 1, characterised in that the distance (4) between the two arms (1) of the liquid-guiding element is smaller than the width of the overflow slot (3).

3. Device according to Claims 1 and 2, characterised in that in the overflow trough, feed channels (9) with orifices (10) are arranged, through which liquid is fed in below the run-off points (5).

4. Device according to Claims 1 to 3, characterised in that, to feed the individual overflow troughs (8), a common pre-distributor (11) is provided, of which the width of the overflow slots (12), arranged at the same height, is adapted to the number of the run-off points (5) of an overflow trough (8).

**Revendications**

1. Dispositif pour la répartition uniforme de liquides sur des surfaces de colonnes au moyen de répartiteurs à rigoles comportant des fentes de trop-plein (3) et des éléments distributeurs de liquide (2), caractérisé en ce que les éléments distributeurs (2) sont constitués par deux branches (1) réunies à la manière d'une épingle à cheveu et disposées à une certaine distance l'une de l'autre dans une région s'évasant vers le bas de la fente de trop-plein (3), s'appuient sur le côté extérieur de la rigole de trop-plein (8), et s'étendent, au niveau de leurs extrémités réunies, jusqu'au dessous du fond (6) de la rigole, la distance (4) entre les branches (1) étant suffisamment importante pour qu'il n'apparaisse aucun effet de capillarité.

2. Dispositif suivant la revendication 1, caractérisé en ce que la distance (4) entre les deux branches (1) de l'élément distributeur de liquide est plus faible que la largeur de la fente de trop-plein (3).

3. Dispositif suivant les revendications 1 et 2, caractérisé en ce que dans les rigoles de trop-plein sont disposés des canaux d'amenée (9) comportant des ouvertures (10) par l'intermédiaire desquelles l'amenée de liquide a lieu audessous des points d'écoulement (5).

4. Dispositif suivant l'une quelconque des revendications 1 à 3, caractérisé en ce que pour l'alimentation des rigoles de trop-plein individuelles (8) est prévu un pré-répartiteur commun (11) dont la largeur des fentes de trop-plein (12) disposées à la même hauteur est adaptée au nombre de points d'écoulement (5) d'une rigole de trop-plein (8).

Fig.1

Ansicht"A„

Fig. 1A

11

11

B

B

A

A

8

5

Fig. 2

12

11

*Schnitt A-A*

5

7

9

Fig. 2A

*Schnitt B-B*

Fig. 2B